# EUROPEAN PATENT APPLICATION

(11) **EP 4 656 381 A1**
(43) Date of publication of application: **03.12.2025**
(21) Application number: 23943778.3
(22) Date of filing: 08.09.2023
(51) Int. Cl.: B32B 27/12, B32B 5/02, D06C 23/04

(54) **FABRIC AND FABRIC PRODUCTION METHOD**

(30) Priority: 28.06.2023 JP 2023106011
(71) Applicant: Sanyo Trading Co., Ltd., Tokyo 101-0054 (JP); Moritsune Co., Ltd., Kahoku-shi, Ishikawa 929-1215 (JP)
(72) Inventor: MORI, Tsunehide, Kahoku-shi, Ishikawa 929-1215 (JP); AOKI, Takashi, Tokyo 101-0054 (JP); HIGASHI, Hirokazu, Tokyo 101-0054 (JP); NAKAMURA, Hiroyuki, Tokyo 101-0054 (JP)
(74) Representative: Mathys & Squire
(86) International application number: PCT/JP2023/032855
(87) International publication number: WO 2025/004392

(57) **Abstract**

Provided is a fabric of a woven fabric or a knitted fabric provided with a pattern expressed by embossing, the fabric including: a fabric layer; and a resin film layer which is laminated on the fabric layer. The fabric layer and the resin film layer may be embossed. In the fabric, a melting point of the resin film layer may be lower than a melting point of the fabric layer. Provided is a method for producing a fabric, the method including: preparing a fabric layer of a woven fabric or knitted fabric; laminating a resin film layer on the fabric layer; and embossing the fabric layer and the resin film layer.

## Description

### BACKGROUND

### 1. TECHNICAL FIELD

The present invention relates to a fabric and a method for producing a fabric.

### 2. RELATED ART

Patent Document 1 discloses an embossed "leather-like nonwoven fabric".

### Related Art Documents

### Patent Document

Patent Document 1: Japanese Patent Application Publication No. H11-241277

There is provided a leather-like fabric with a higher quality. General Disclosure

A first aspect of the present invention provides a fabric of a woven fabric or a knitted fabric provided with a pattern expressed by embossing, the fabric including: a fabric layer; and a resin film layer which is laminated on the fabric layer. The fabric layer and the resin film layer may be embossed.

In the fabric, a melting point of the resin film layer may be lower than a melting point of the fabric layer.

In any of the fabrics, a melting point of the resin film layer may be 80°C or higher and 160°C or lower.

In any of the fabrics, a film thickness of the resin film layer may be 10 µm or more and 100 µm or less.

In any of the fabrics, a material of the resin film layer may include at least one of polyester, polyurethane, an olefin-based resin, an ethylene vinyl acetate (EVA) resin, or polyamide.

In any of the fabrics, the resin film layer may have a first layer laminated in contact with the fabric layer and a second layer laminated in contact with the first layer.

In any of the fabrics, the second layer may have an opening for exposing the first layer.

In any of the fabrics, the resin film layer may be laminated on a front surface side of the fabric layer.

In any of the fabrics, the resin film layer may be laminated on a back surface side of the fabric layer.

In any of the fabrics, a single yarn decitex of the fabric layer may have a single yarn of 0.05 or more and 0.7 or less.

In any of the fabrics, a warp yarn of the fabric layer may have a yarn density of 200 or more and 300 or less.

In any of the fabrics, a film thickness of the fabric layer may be 0.3 mm or more and 1.5 mm or less.

In any of the fabrics, a total film thickness of the fabric layer and the resin film layer may be 0.3 mm or more and 1.5 mm or less.

In any of the fabrics, an embossing depth of the fabric may be 50 µm or more and 400 µm or less.

In any of the fabrics, the fabric may satisfy at least one evaluation criterion of JIS L1091, JIS L1092, JIS L1093, JIS L1096, JIS L1076, JIS L0860, JIS L0849, JIS L0844, or JIS L0842.

A second aspect of the present invention provides a method for producing a fabric, the method including: preparing a fabric layer of a woven fabric or knitted fabric; laminating a resin film layer on the fabric layer; and embossing the fabric layer and the resin film layer.

In the method for producing the fabric, the embossing may include placing a release paper on an upper surface of the resin film layer, and embossing the fabric layer and the resin film layer from above the release paper.

In any of the methods for producing the fabric, the embossing may include placing a release paper on a lower surface of the resin film layer, and embossing the fabric layer and the resin film layer from above the fabric layer.

In any of the methods for producing the fabric, a film thickness of the release paper may be 30 µm or more and 100 µm or less.

Any of the methods for producing the fabric may include executing surface processing that imparts a release effect to the release paper.

Any of the methods for producing the fabric may include performing texturing on the release paper.

In any of the methods for producing the fabric, a material of the release paper may include at least one of paper, polyethylene, polypropylene, or an epoxy resin.

Any of the methods for producing the fabric may include heating the resin film layer at a temperature equal to or higher than a melting point of the resin film layer.

In any of the methods for producing the fabric, the heating the resin film layer may be executed after the laminating the resin film layer on the fabric layer and before the embossing the fabric layer and the resin film layer.

In any of the methods for producing the fabric, the heating the resin film layer may be executed when the fabric layer and the resin film layer are embossed.

The summary clause does not necessarily describe all necessary features of the embodiments of the present invention. The present invention may also be a sub-combination of the features described above.

### BRIEF DESCRIPTION OF THE DRAWINGS

Fig. 1 is a photograph of a front surface of a fabric 100.
Fig. 2A is a schematic diagram of a cross section of the fabric 100 before embossing.
Fig. 2B is a schematic diagram of a cross section of the fabric 100 after embossing.
Fig. 2C shows an example of a flowchart for producing the fabric 100.
Fig. 3 shows an example of a configuration of a warp yarn 10.
Fig. 4 shows an example of a processed yarn used for a warp yarn 510 according to a comparative example.
Fig. 5 shows an example of a method for producing the fabric 100.
Fig. 6A shows a modification of the fabric 100.
Fig. 6B shows an example of the method for producing the fabric 100.
Fig. 7A shows a modification of the fabric 100.
Fig. 7B shows an example of the method for producing the fabric 100.

### DESCRIPTION OF EXEMPLARY EMBODIMENTS

Hereinafter, the invention will be described through embodiments of the invention, but the following embodiments do not limit the invention according to claims. In addition, not all of the combinations of features described in the embodiments are essential to the solving means of the invention.

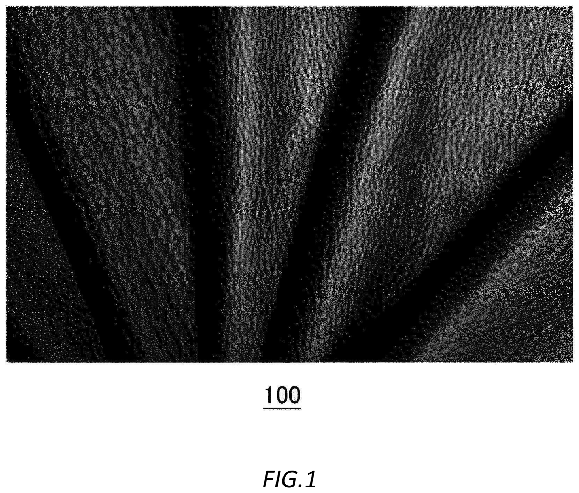

Fig. 1 is a photograph of a front surface of a fabric 100. The fabric 100 is a fabric of a woven fabric or a knitted fabric with a pattern expressed by embossing. The fabric 100 of the present example has a leather-like design realized by embossing.

The fabric 100 may be a fabric using at least one of polyester, nylon, acrylic, linen, cotton, silk, rayon, or wool. The fabric 100 may have unevenness and gloss as in genuine or synthetic leather. The fabric 100 of the present example can realize a leather-like texture without providing a backing fabric such as a nonwoven fabric on a back side. However, a backing fabric such as polyurethane or nonwoven fabric may be provided on a back surface of the fabric 100.

The leather-like fabric 100 for which polyester is used can reduce its mass by 50% or more as compared with a fabric for which genuine leather or polyvinyl chloride (PVC) is used. In addition, unlike the fabric for which genuine leather or PVC is used, the fabric 100 does not easily become hot in the summer, and does not easily become cold in the winter. The fabric 100 can be finished by using a steam iron to improve a finishing property. When the fabric 100 is composed only of polyester, its recyclability is improved.

The fabric 100 may be used for a vehicle seat cover which requires high strength, wrinkle resistance, flame retardancy, and the like. The fabric 100 may have water repellency and flame retardancy. The fabric 100 may satisfy at least one evaluation criterion of JIS L1091, JIS L1092, JIS L1093, JIS L1096, JIS L1076, JIS L0860, JIS L0849, JIS L0844, or JIS L0842. However, applications of the fabric 100 are not particularly limited.

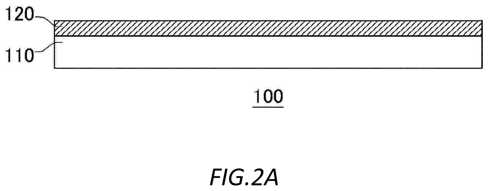

Fig. 2A is a schematic diagram of a cross section of the fabric 100 before embossing. The fabric 100 includes a fabric layer 110 and resin film layer 120.

The fabric layer 110 may be a woven fabric composed of warp yarns and weft yarns as described later. A material of the fabric layer 110 may include at least one of polyester, nylon, acrylic, linen, cotton, silk, rayon, or wool. The material of the fabric layer 110 in the present example is polyester. The fabric layer 110 of the present example does not have a lining, but may have a lining. A film thickness of the fabric layer 110 may be 0.3 mm or more and 1.5 mm or less. For example, the film thickness of the fabric layer 110 is 0.8 mm.

A resin film layer 120 is laminated on the fabric layer 110. The resin film layer 120 of the present example is provided on a front surface side of the fabric layer 110, but may be provided on a back surface side of the fabric layer 110. The resin film layer 120 may be bonded to the fabric layer 110. The resin film layer 120 may be attached to or applied to the fabric layer 110.

A material of the resin film layer 120 may include at least one of polyester, polyurethane, an olefin-based resin, an ethylene vinyl acetate (EVA) resin, or polyamide. The material of the resin film layer 120 may include polyester, and all may be polyester. The resin film layer 120 in the present example is a polyester film.

The fabric layer 110 and the resin film layer 120 may be composed of a same material. When each layer of the fabric 100 is composed of the same material, recyclability is improved. The fabric layer 110 and the resin film layer 120 may have the same material or different compositions. For example, the fabric layer 110 and the resin film layer 120 are polyesters having different compositions. The fabric layer 110 and the resin film layer 120 may have different melting points due to different compositions.

The melting point of the resin film layer 120 may be lower than the melting point of fabric layer 110. By heating the fabric 100 to melt the resin film layer 120, the resin film layer 120 can be bonded onto the fabric layer 110. The melting point of the resin film layer 120 may be 80°C or higher and 160°C or lower. In an example, the melting point of the fabric layer 110 is 220°C, and the melting point of resin film layer 120 is 110°C.

A film thickness of the resin film layer 120 may be thinner than the film thickness of the fabric layer 110. The film thickness of the resin film layer 120 may be 10 µm or more and 100 µm or less.

The resin film layer 120 may be transparent or colored. A color of the fabric 100 can be adjusted by coloring the resin film layer 120. The resin film layer 120 may have water repellency and may have flame retardancy.

In the fabric 100, the resin film layer 120 is provided to impart glossiness, whereby a genuine leather-like design can be realized. The resin film layer 120 can coat dense fibers of the fabric layer 110, whereby scratch resistance can be improved. Gaps between the fibers of the fabric layer 110 are filled with the resin film layer 120, whereby embossing unevenness can be improved compared to fabric layer 110 alone.

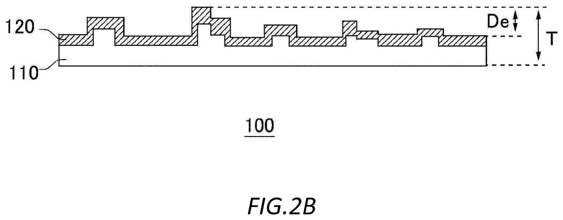

Fig. 2B is a schematic diagram of a cross section of the fabric 100 after embossing. In the fabric 100 of the present example, the fabric layer 110 and the resin film layer 120 are embossed.

The fabric layer 110 and the resin film layer 120 have unevenness formed by the embossing. In the present example, the fabric layer 110 and the resin film layer 120 are bonded together, and both the fabric layer 110 and the resin film layer 120 are embossed, whereby deep unevenness can be realized. An embossing depth De of the fabric 100 may be 50 µm or more and 400 µm or less. The embossing depth De may be a maximum value of a difference between a convex portion and a concave portion in the embossed resin film layer 120.

Here, the fabric layer 110 may have a single yarn having a single yarn decitex of 0.05 or more and 0.7 or less. In this way, by thinning the single yarn, rigidity of the single yarn is weakened, and it is possible to realize deep embossing. In addition, by thinning the single yarn, it is possible to remove a fine line and realize a leather-like fabric with a high quality in which an unevenness expression is improved.

A total film thickness T of the fabric layer 110 and the resin film layer 120 may be a film thickness between the convex portion of the embossing and a back surface of the fabric layer 110. The total film thickness T of the fabric layer 110 and the resin film layer 120 may be 0.3 mm or more and 1.5 mm or less. As will be described later, the fabric 100 can have a large film thickness by incorporating a shrinkage yarn to impart bulkiness to yarns.

The fabric 100 of the present example can obtain more stable physical properties as compared with a nonwoven fabric or the like having a variation in density by laminating the resin film layer 120 on the fabric layer 110 composed of a woven fabric or a knitted fabric and then performing embossing. Thus, the fabric 100 having uniform tensile strength and stretchability can be obtained. By realizing uniform embossing, the leather-like fabric 100 with a higher quality can be obtained.

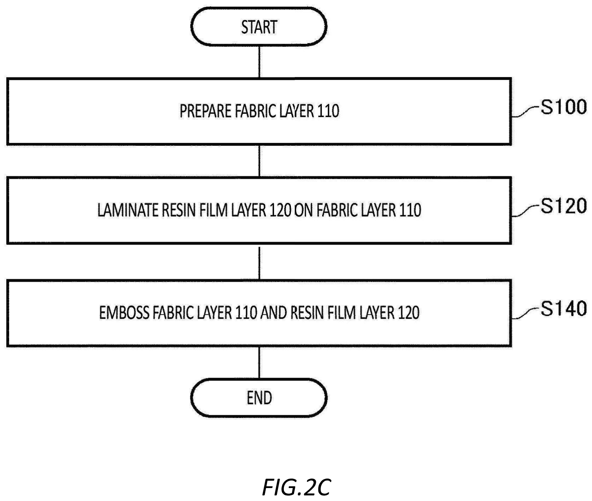

Fig. 2C shows an example of a flowchart for producing the fabric 100. The flowchart of the present example is an example of a method for producing the fabric 100, and the present invention is not limited thereto.

In step S100, the fabric layer 110 of a woven fabric or a knitted fabric is prepared. A backing fabric such as polyurethane or nonwoven fabric may be attached to the back surface of the fabric layer 110. Even when a backing material is attached to the back surface of the fabric layer 110, the fabric layer 110 and the resin film layer 120 can be easily recycled by peeling the backing material.

In step S120, the resin film layer 120 is laminated on the fabric layer 110. The resin film layer 120 may be attached to or applied to the fabric layer 110. The resin film layer 120 may be attached to the front surface or the back surface of the fabric layer 110.

In step S140, the fabric layer 110 and the resin film layer 120 are embossed. Embossing the fabric layer 110 and the resin film layer 120 means that unevenness is formed in both the fabric layer 110 and the resin film layer 120. In the present example, the fabric layer 110 and the resin film layer 120 may be embossed in a state where the fabric layer 110 and the resin film layer 120 are laminated.

Here, the resin film layer 120 may be bonded to the fabric layer 110 by heating. The method for producing the fabric 100 may include a step of heating resin film layer 120 at a temperature equal to or higher than the melting point of resin film layer 120. A timing of heating the resin film layer 120 may be arbitrary. The step of heating the resin film layer 120 may be executed after the step of laminating the resin film layer 120 on the fabric layer 110 and before the step of embossing the fabric layer 110 and the resin film layer 120. The step of heating the resin film layer 120 may be executed when the fabric layer 110 and the resin film layer 120 are embossed. The embossing of the fabric layer 110 and the resin film layer 120 may be performed simultaneously with the embossing.

Note that a step of imparting functionality such as water repellent processing or flame retardant processing to the fabric 100 may be included. The fabric layer 110 may be provided with the functionality, the resin film layer 120 may be provided with the functionality, or both the fabric layer 110 and the resin film layer 120 may be provided with the functionality. The fabric layer 110 and the resin film layer 120 may have different functions. For example, the fabric 100 may be dipped using a functional agent such as a water repellent agent to impart functionality such as water repellency. The functional agent may have any function such as flame retardancy. The fabric 100 may be immersed at a time using a plurality of functional agents in combination.

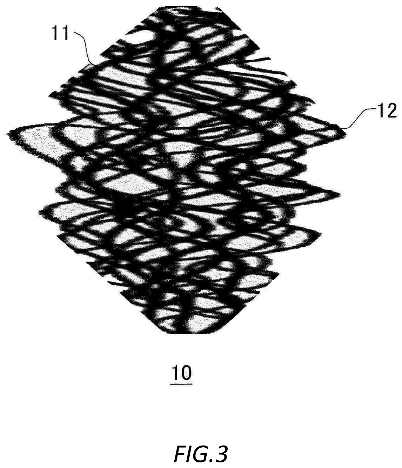

Fig. 3 shows an example of a configuration of a warp yarn 10. The warp yarn 10 in the present example has a first shrinkage yarn 11 which is predetermined, and a second shrinkage yarn 12 which is different from the first shrinkage yarn 11. In the warp yarn 10 of the present example, the first shrinkage yarn 11 and the second shrinkage yarn 12 are mixed. That is, the first shrinkage yarn 11 and the second shrinkage yarn 12 are mixed together to form one warp yarn 10. The first shrinkage yarn 11 and the second shrinkage yarn 12 may have heat-shrinking properties different from each other. In the present example, a case is described in which the warp yarn 10 includes the shrinkage yarn, but the shrinkage yarn may not necessarily be included.

In the warp yarn 10, by having the shrinkage yarn, a crimp is spread in a lateral direction, and thus it is possible to eliminate the fine line. In the warp yarn 10 of the present example, by using the shrinkage yarns which are different from each other, such as the first shrinkage yarn 11 and the second shrinkage yarn 12, it is possible to make the fine line even less visible. The warp yarn 10 may use three or more shrinkage yarns. The fabric 100 can have a large film thickness by incorporating the shrinkage yarns to impart bulkiness to yarns. By incorporating the shrinkage yarn, it is possible to increase a void in the fabric 100, making it easy to press the fabric 100 with a mold, and making it easy to create unevenness by the embossing.

It should be noted that by adjusting crimps of the first shrinkage yarn 11 and the second shrinkage yarn 12, it is possible to arbitrarily adjust front surface gloss of the fabric 100. In this way, in a view of the front surface gloss and the embossing of the fabric 100, the warp yarn 10 including any shrinkage yarn may be selected. Similarly, even for a weft yarn, a plurality of shrinkage yarns different from each other may be used.

By increasing a yarn density of the warp yarn 10, gaps in the fabric 100 are reduced, and the weft yarn becomes difficult to see. Thus, the fabric layer 110 becomes flat, and a leather-like fabric with a high quality is easily realized. The yarn density is a number of at least one single yarn per inch. The yarn density of the warp yarn 10 may be 200 or more and 300 or less. For example, by blowing five or more front yarns in the weft yarn, it is possible to cause shrinkage to occur in the lateral direction, and increase the yarn density of the warp yarn 10.

Here, when the single yarn of the fabric layer 110 is thinned, yarn breakage due to embossing may occur. In the present example, by increasing the yarn density of the warp yarn 10 to increase a total number of yarns, even when the single yarn of the fabric layer 110 is thinned, it is possible to provide the fabric layer 110 that disperses an embossing pressure to be less likely to break. By laminating the resin film layer 120 on the fabric layer 110, the resin film layer 120 follows the unevenness after the embossing, thereby causing consolidation of fibers and improving resistance to damage.

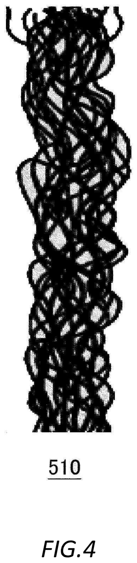

Fig. 4 shows an example of a processed yarn used for a warp yarn 510 according to a comparative example. Unlike the warp yarn 10 of the embodiment, the warp yarn 510 do not include a plurality of shrinkage yarns. In the warp yarn 510, a false-twisted shape of the yarn can be seen, and the fine line can be easily distinguished. Therefore, when a fabric is formed using the warp yarn 510, the fine line may remain on the fabric.

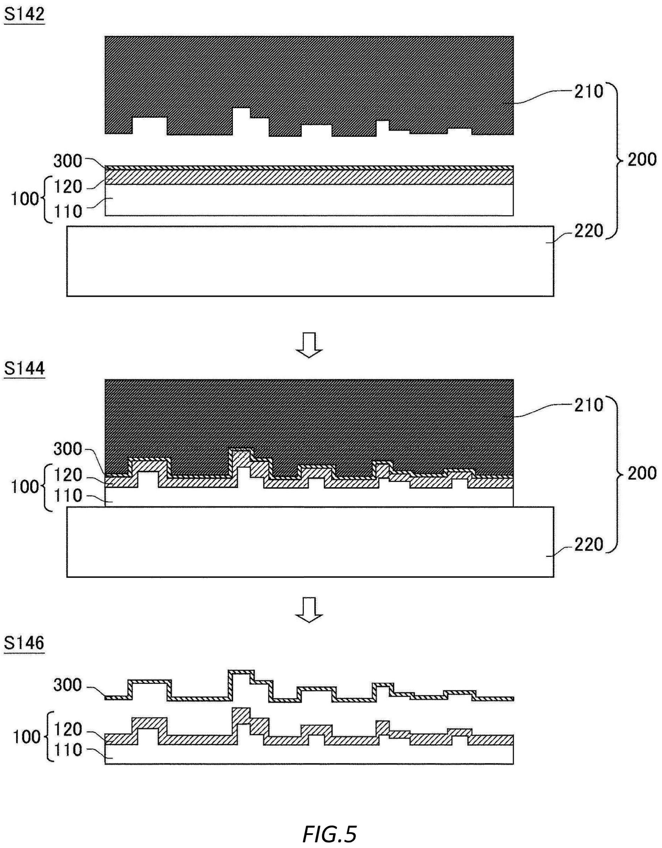

Fig. 5 shows an example of the method for producing the fabric 100. In the present example, steps S142 to S146 for producing the fabric 100 using embossing machine 200 will be described. Steps S142 to S146 in the present example are an example of step S140 in Fig. 2C. The embossing machine 200 of the present example includes a mold 210 and a stand 220.

The mold 210 may be a roll-shaped or plate-shaped mold having unevenness corresponding to an embossing mold to be applied to the fabric 100. The mold 210 may be heated to emboss the fabric 100. A heating temperature of embossing using the mold 210 may be lower than a glass transition point of the fabric layer 110. The heating temperature of embossing using the mold 210 may be equal to or higher than the melting point of the resin film layer 120. However, the heating temperature of the mold 210 is not limited thereto.

The mold 210 may have various shapes or depths depending on dimensions of a convex portion and a concave portion of an embossed pattern or the like. When the mold 210 of the roll shape is used, the embossing depth De may be controlled by adjusting conditions such as a temperature of the mold 210, a pressure, and a conveyor speed. When the mold 210 of the plate shape is used, the embossing depth De may be controlled by adjusting conditions such as the temperature of the mold 210, the pressure, and a holding time during the processing.

The stand 220 supports the fabric 100 at a time of embossing the fabric 100. The stand 220 may have a lower density material that is lower in density than the fabric 100. The low density material of the stand 220 may be polyurethane. The stand 220 may have a material, which is higher in density than the lower density material, below the lower density material.

In step S142, a release paper 300 is placed on the resin film layer 120. In the present example, the release paper 300 is provided between the mold 210 and the resin film layer 120. The release paper 300 may be provided between the mold 210 and the resin film layer 120 in a state of being bonded to the resin film layer 120, or may be provided between the mold 210 and the resin film layer 120 in a state of not being bonded to the resin film layer 120.

The release paper 300 prevents the resin film layer 120 from being bonded to the embossing machine 200. The release paper 300 of the present example has a same size as the fabric 100, but may be larger than the fabric 100. A material of the release paper 300 may include at least one of paper, polyethylene, polypropylene, or epoxy resin. It is sufficient if the release paper 300 has a film thickness that does not hinder the embossing of the fabric 100. The film thickness of the release paper 300 may be 30 µm or more and 100 µm or less.

The resin film layer 120 may be attached to the fabric layer 110 before the embossing. The resin film layer 120 may be attached to the fabric layer 110 in a state where the release paper 300 is attached. The resin film layer 120 may be attached to the fabric layer 110 with a laminator. The resin film layer 120 may be applied to the fabric layer 110.

In step S144, the fabric layer 110 and the resin film layer 120 are embossed from above the release paper 300. That is, the fabric 100 is embossed in a state where the release paper 300 is sandwiched between the fabric 100 and the mold 210. The fabric 100 may be embossed in a state where the stand 220 is disposed below the fabric 100. The embossing machine 200 may surface-heat the fabric 100 by using the mold 210. Here, the surface heating refers to heating a surface in a wider range, rather than applying a high frequency wave to a fabric to process a part of the fabric as in using a high frequency welder. The resin film layer 120 may be bonded to the fabric layer 110 by heating during the embossing.

In step S146, the embossed fabric 100 is taken out from the embossing machine 200. By peeling the release paper 300 from the fabric 100, the fabric 100 that is embossed can be obtained. The resin film layer 120 is separated from the release paper 300, and can maintain an embossed shape following the fabric layer 110. By using the release paper 300, the resin film layer 120 can be prevented from adhering to the mold 210. In this way, by devising the embossing method, the fabric 100 can be obtained which has a leather-like texture with improved unevenness expression and a high quality.

The method for producing the fabric 100 may include a step of executing surface processing for imparting a release effect to the release paper 300. For example, a material that imparts the release effect, such as silicon, is applied to the release paper 300. The surface processing of the release paper 300 may be executed before the release paper 300 is placed on the fabric 100, or may be executed after the release paper 300 is placed on the fabric 100.

The method for producing the fabric 100 may include a step of performing texturing on the release paper 300. By applying texturing to the release paper 300, scratches are formed on a front surface of the resin film layer 120, causing diffuse reflection to reduce glossiness. The glossiness of the fabric 100 can be adjusted by adjusting a degree of texturing of the resin film layer 120.

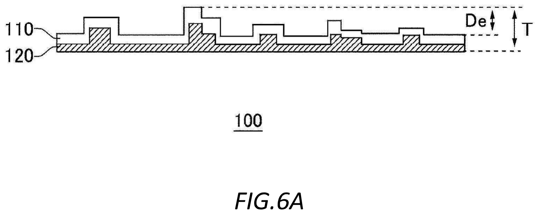

Fig. 6A shows a modification of the fabric 100. The fabric 100 in the present example is different from the fabric 100 in Fig. 2B in that the resin film layer 120 is attached to the back surface side of the fabric layer 110. In the present example, differences from the fabric 100 in Fig. 2B will be particularly described.

The resin film layer 120 is laminated on the back surface side of the fabric layer 110. Also in the present example, both the fabric layer 110 and the resin film layer 120 are embossed. By providing the resin film layer 120 on the back surface side of the fabric layer 110, fibers on the back surface of the fabric layer 110 can be consolidate to eliminate yarn fraying which occurs during cutting and is specific to a woven fabric. Since the resin film layer 120 attached to the back surface follows the unevenness after the embossing, the resistance to damage from the front surface can also be improved. The embossing depth De and the total film thickness T of the fabric 100 may be the same as those of the fabric 100 of Fig. 2C.

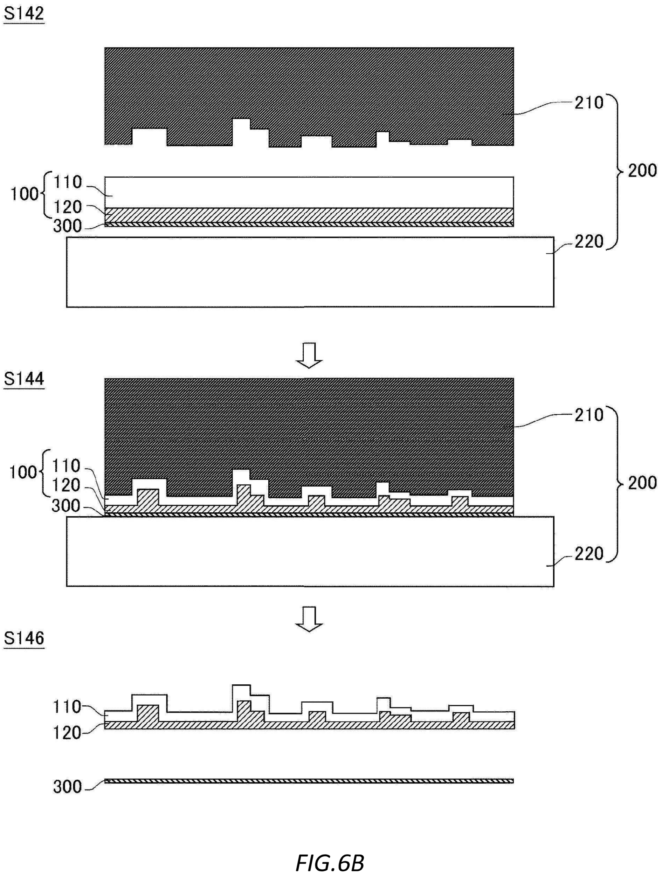

Fig. 6B shows an example of the method for producing the fabric 100. In the present example, the method for producing the fabric 100 shown in Fig. 6A is shown. The method for producing the fabric 100 of the present example is different from the producing method of Fig. 5 in that the resin film layer 120 is provided on the back surface of the fabric layer 110 and the release paper 300 is provided on a lower surface of the fabric 100. In the present example, differences from the method for producing the fabric 100 shown in Fig. 5 will be particularly described.

In step S142, the release paper 300 is placed on a lower surface of the resin film layer 120. In the present example, the release paper 300 is provided between the stand 220 and the resin film layer 120. The release paper 300 may be provided between the stand 220 and the resin film layer 120 in a state of being bonded to the resin film layer 120, or may be provided between the stand 220 and the resin film layer 120 in a state of not being bonded to the resin film layer 120.

In step S144, the fabric layer 110 and the resin film layer 120 are embossed from above the fabric layer 110. In the present example, the fabric 100 is embossed in a state where the release paper 300 is sandwiched between the fabric 100 and the stand 220. The embossing machine 200 may surface-heat the fabric 100 from the fabric layer 110 side by using the mold 210. The resin film layer 120 may be bonded to the fabric layer 110 by heating during the embossing.

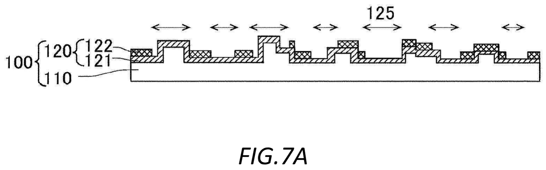

Fig. 7A shows a modification of the fabric 100. The fabric 100 in the present example is different from the fabric 100 in Fig. 2B in that the resin film layer 120 has a laminated structure. In the present example, differences from the fabric 100 in Fig. 2B will be particularly described. The resin film layer 120 of the present example has a first layer 121 and a second layer 122.

The first layer 121 is laminated in contact with the fabric layer 110. The resin film layer 120 of the present example is laminated on the front surface side of the fabric layer 110. The first layer 121 in the present example is provided on an entire surface of the fabric layer 110, but may be provided on a part of the front surface side of the fabric layer 110. The first layer 121 has an uneven shape formed by the embossing.

The second layer 122 is laminated in contact with the first layer 121. The second layer 122 may be located at a convex part or a concave part of the first layer 121 in the uneven shape of the first layer 121. The second layer 122 may be located across the unevenness of the first layer 121.

The second layer 122 may have an opening 125 for exposing the first layer 121. The second layer 122 has a region covering the first layer 121 and a region exposing the first layer 121 through the opening 125. The opening 125 may expose the convex part of the first layer 121 or may expose the concave part of the first layer 121. The opening 125 may be provided across an uneven part of the first layer 121. The film thickness of the resin film layer 120 can be changed by selectively providing the second layer 122. A film thickness of the second layer 122 may be the same as or different from that of the first layer 121.

The fabric 100 of the present example includes the first layer 121 and the second layer 122, so that an arbitrary color and pattern can be formed. The fabric 100 may include the first layer 121 and the second layer 122 of different colors. The arbitrary pattern can be realized by changing colors and shapes of the first layer 121 and the second layer 122.

The resin film layer 120 of the present example has a two-layer structure of the first layer 121 and the second layer 122, but may have a laminated structure of three or more layers. The resin film layer 120 of the present example can give a film thickness difference to the fabric 100 by the laminated structure. In addition, the resin film layer 120 can be provided with an additional level difference in addition to embossing by the laminated structure. The laminated structure of the resin film layer 120 may be integrated by heating the first layer 121 and the second layer 122 beyond their melting points. Note that the resin film layer 120 may have a level difference on the front surface by a method other than the laminated structure.

The fabric 100 of the present example can reproduce an antique feeling by changing the color, shape, and film thickness of the resin film layer 120. A shading of the fabric 100 may be adjusted by creating a difference in the film thickness of the resin film layer 120.

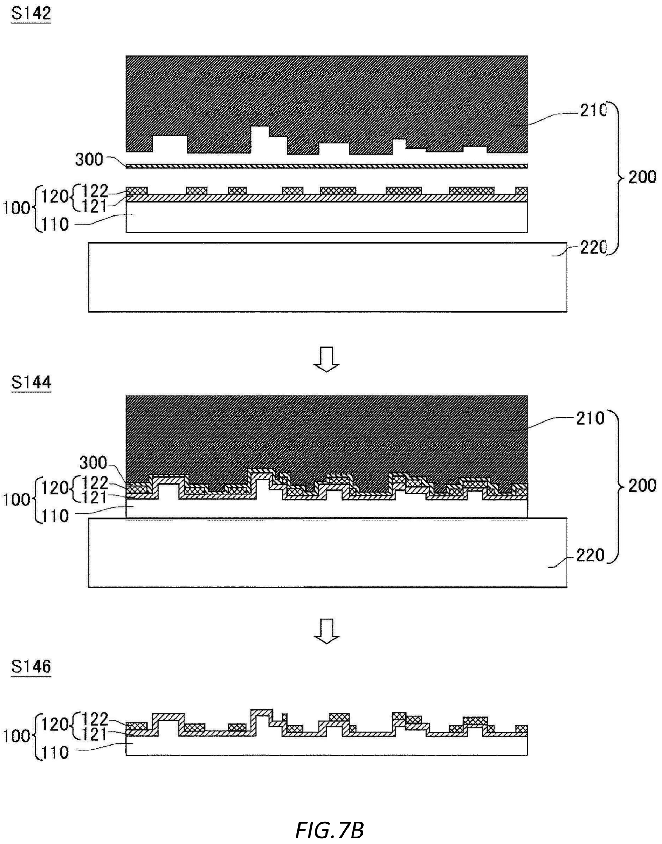

Fig. 7B shows an example of the method for producing the fabric 100. In the present example, the method for producing the fabric 100 shown in Fig. 7A is shown. The method for producing the fabric 100 of the present example is different from the producing method of Fig. 5 in that the resin film layer 120 has a laminated structure. In the present example, differences from the method for producing the fabric 100 shown in Fig. 5 will be particularly described.

In step S142, the release paper 300 is provided on an upper surface of the resin film layer 120. The upper surface of the resin film layer 120 may be a surface of the resin film layer 120 on a front surface side of the fabric 100. In the present example, the release paper 300 is provided between the mold 210 and the resin film layer 120. Note that when the resin film layer 120 is provided on the back surface of the fabric layer 110, the release paper 300 may be provided on the lower surface of the resin film layer 120.

In step S144, the fabric layer 110 and the resin film layer 120 are embossed from above the release paper 300. In the present example, both the first layer 121 and the second layer 122 may be embossed. Positions of the first layer 121 and the second layer 122, and a position of the embossing may be aligned so as to have an arbitrary positional relationship.

In step S146, the embossed fabric 100 is taken out from the embossing machine 200. Thus, the fabric 100 having the laminated structure with the resin film layer 120 can be produced.

While the present invention has been described by way of the embodiments, the technical scope of the present invention is not limited to the above-described embodiments. It is apparent to persons skilled in the art that various alterations or improvements can be made to the above-described embodiments. It is also apparent from description of the claims that the embodiments to which such changes or improvements are made may be included in the technical scope of the present invention.

It should be noted that each processing of the operations, procedures, steps, stages, and the like performed by the device, system, program, and method shown in the claims, specification, or drawings can be executed in any order as long as the order is not indicated by "prior to", "before", or the like and as long as the output from previous processing is not used in later processing. Even if the operation flow is described using phrases such as "first" or "next" for the sake of convenience in the claims, specification, or drawings, it does not necessarily mean that the process must be performed in this order.

### EXPLANATION OF REFERENCES

10: warp yarn, 11: first shrinkage yarn, 12: second shrinkage yarn, 100: fabric, 110: fabric layer, 120: resin film layer, 121: first layer, 122: second layer, 125: opening, 200: embossing machine, 210 : mold, 220 : stand, 300 : release paper, and 510 : warp yarn.

## Claims

1. A fabric of a woven fabric or a knitted fabric provided with a pattern expressed by embossing, the fabric comprising:
a fabric layer; and
a resin film layer which is laminated on the fabric layer, wherein
the fabric layer and the resin film layer are embossed.

2. The fabric according to claim 1, wherein
a melting point of the resin film layer is lower than a melting point of the fabric layer.

3. The fabric according to claim 1, wherein
a melting point of the resin film layer is 80°C or higher and 160°C or lower.

4. The fabric according to claim 1, wherein
a film thickness of the resin film layer is 10 µm or more and 100 µm or less.

5. The fabric according to claim 1, wherein
a material of the resin film layer include at least one of polyester, polyurethane, an olefin-based resin, an ethylene vinyl acetate (EVA) resin, or polyamide.

6. The fabric according to claim 1, wherein
the resin film layer has a first layer laminated in contact with the fabric layer and a second layer laminated in contact with the first layer.

7. The fabric according to claim 6, wherein
the second layer has an opening for exposing the first layer.

8. The fabric according to any one of claims 1 to 7, wherein
the resin film layer is laminated on a front surface side of the fabric layer.

9. The fabric according to any one of claims 1 to 7, wherein
the resin film layer is laminated on a back surface side of the fabric layer.

10. The fabric according to any one of claims 1 to 7, wherein
a single yarn decitex of the fabric layer has a single yarn of 0.05 or more and 0.7 or less.

11. The fabric according to any one of claims 1 to 7, wherein
a warp yarn of the fabric layer has a yarn density of 200 or more and 300 or less.

12. The fabric according to any one of claims 1 to 7, wherein
a film thickness of the fabric layer is 0.3 mm or more and 1.5 mm or less.

13. The fabric according to any one of claims 1 to 7, wherein
a total film thickness of the fabric layer and the resin film layer is 0.3 mm or more and 1.5 mm or less.

14. The fabric according to any one of claims 1 to 7, wherein
an embossing depth of the fabric is 50 µm or more and 400 µm or less.

15. The fabric according to any one of claims 1 to 7, wherein
the fabric satisfies at least one evaluation criterion of JIS L1091, JIS L1092, JIS L1093, JIS L1096, JIS L1076, JIS L0860, JIS L0849, JIS L0844, or JIS L0842.

16. A method for producing a fabric comprising:
preparing a fabric layer of a woven fabric or knitted fabric;
laminating a resin film layer on the fabric layer; and
embossing the fabric layer and the resin film layer.

17. The method for producing the fabric according to claim 16, wherein
the embossing includes
placing a release paper on an upper surface of the resin film layer, and
embossing the fabric layer and the resin film layer from above the release paper.

18. The method for producing the fabric according to claim 16, wherein
the embossing includes
placing a release paper on a lower surface of the resin film layer, and
embossing the fabric layer and the resin film layer from above the fabric layer.

19. The method for producing the fabric according to claim 17 or 18, wherein
a film thickness of the release paper is 30 µm or more and 100 µm or less.

20. The method for producing the fabric according to claim 17 or 18, comprising
executing surface processing that imparts a release effect to the release paper.

21. The method for producing the fabric according to claim 17 or 18, comprising
performing texturing on the release paper.

22. The method for producing the fabric according to claim 17 or 18, wherein
a material of the release paper includes at least one of paper, polyethylene, polypropylene, or an epoxy resin.

23. The method for producing the fabric according to claim 16, comprising
heating the resin film layer at a temperature equal to or higher than a melting point of the resin film layer.

24. The method for producing the fabric according to claim 23, wherein
the heating the resin film layer is executed after the laminating the resin film layer on the fabric layer and before the embossing the fabric layer and the resin film layer.

25. The method for producing the fabric according to claim 23, wherein
the heating the resin film layer is executed when the fabric layer and the resin film layer are embossed.
